# EUROPÄISCHE PATENTSCHRIFT

(11) **EP 3 792 407 B1**
(45) Veröffentlichungstag und Bekanntmachung des Hinweises auf die Patenterteilung: **11.10.2023**
(21) Anmeldenummer: 20179910.3
(22) Anmeldetag: 15.06.2020
(51) Int. Cl.: E02F 5/10, H02G 1/06

(54) **VERLEGEVORRICHTUNG ZUR ERDVERLEGUNG FLEXIBLER STRANGMATERIALIEN UND PRIMÄEREINFÜHRUNG FÜR EINE DERARTIGE VERLEGEVORRICHTUNG**
LAYING DEVICE FOR THE UNDERGROUND INSERTION OF FLEXIBLE STRAND MATERIALS AND PRIMARY INTRUDUCTION DEVICE FOR SUCH LAYING DEVICE
DISPOSITIF DE POSE POUR LA POSE DE MATÉRIAUX EN BRINS FLEXIBLES DANS LE SOL ET DISPOSITIF D'INSERTION PRINCIPALE POUR UN TEL DISPOSITIF DE POSE

(30) Priorität: 12.09.2019 DE 202019105045 U
(43) Veröffentlichungstag der Anmeldung: 17.03.2021
(73) Patentinhaber: Föckersperger jun., Walter, 84189 Pauluszell/Ndb. (DE)
(72) Erfinder: Föckersperger, Walter, 84189 Pauluszell (DE)
(74) Vertreter: Winter, Brandl - Partnerschaft mbB

(56) Entgegenhaltungen:
- EP-A1- 3 327 203
- EP-A1- 3 327 204
- US-A- 3 802 210
- US-A1- 2007 286 681

## Beschreibung

Die Erfindung betrifft ein Verlegevorrichtung und eine Primäreinführung für eine Verlegevorrichtung zum Verlegen von flexiblen Strangmaterialien im Erdreich, insbesondere wenig flexible bzw. formstabile Hochspannungskabel mit großen Durchmessern gemäß dem Oberbegriff des Anspruchs 1 bzw. des Anspruchs 9.

Eine gattungsgemäße (in der Literatur als Kabelpflug, Verlegepflug, o. dgl. bekannte) Verlegevorrichtung zum Einführen von flexiblen Strangmaterialien und eine Einführung für eine Verlegevorrichtung sind z. B. aus der EP 3327203 A1 oder der EP 3327204 A1 bekannt.

Die in der EP 3327204 A1 beschriebene Verlegevorrichtung weist eine sich in Vertikalrichtung der Verlegevorrichtung erstreckende Verlegeschlitzausbildungseinrichtung zum Ausbilden eines Verlegeschlitzes im Erdreich sowie eine der Verlegeschlitzausbildungseinrichtung in einer Schlepprichtung der Verlegevorrichtung nachlaufende Einführung zum Einführen mehrerer Strangmaterialien auf. Die Einführung weist ein Hohlgehäuse auf, das zur Führung der Strangmaterialien mehrere, voneinander getrennt ausgebildete Führungsschächte aufweist, die jeweils zwischen einer zugeordneten Eintrittsöffnung am Kopfende der Einführung und einer zugeordneten Austrittsöffnung am Fußende der Einführung voneinander getrennt bogenförmig verlaufen. Jeder Führungsschacht kann ein Strangmaterial von einer zugeordneten Eintrittsöffnung im Kopfbereich der Einführung bis zu der Austrittsöffnung im Fußbereich der Einführung führen. Das Hohlgehäuse ist, in Schlepprichtung der Verlegevorrichtung gesehen, im Wesentlichen umgekehrt T-förmig dergestalt ausgebildet, dass die Austrittsöffnungen der Führungsschächte in definierten Mindestabständen horizontal nebeneinander angeordnet sind und die durch die Austrittsöffnungen austretenden Strangmaterialien somit horizontal nebeneinander verlegt werden.

Die in der EP 3327203 A1 beschriebene Verlegevorrichtung weist ähnlich wie die in der EP 3327204 A1 beschriebene Verlegevorrichtung eine sich in einer Vertikalrichtung der Verlegevorrichtung erstreckende Verlegeschlitzausbildungseinrichtung zum Ausbilden eines Verlegeschlitzes im Erdreich auf. Des Weiteren weist sie eine in Längsrichtung der Verlegevorrichtung der Verlegeschlitzausbildungseinrichtung nachlaufende, geschleppte erste Einführung auf, die zum Einführen zumindest eines flexiblen ersten Strangmaterials in den Verlegeschlitz vorgesehen ist. Eine der ersten Einführung nachlaufende, geschleppte zweite Einführung ist zum Einführen zumindest eines flexiblen zweiten Strangmaterials in den Verlegeschlitz in einem vertikalen Mindestabstand oberhalb des ersten Strangmaterials vorgesehen, wobei zwischen der ersten Einführung und der zweiten Einführung ein Verdränger mit einer Verdrängerfläche angeordnet ist, um Erde aus dem an den Verlegeschlitz seitlich angrenzenden Erdreich auf das zumindest eine erste Strangmaterial zu verdrängen. Der Verdränger ist vorzugsweise mit der zweiten Einführung relativ zur ersten Einführung auf- und abwärts schwenkverstellbar. Bei dieser Verlegevorrichtung wird das erste Strangmaterial in Form von Kabeln oder Rohren ähnlich wie bei der in der EP 3327204 A1 beschriebenen Verlegevorrichtung durch Austrittsöffnungen horizontal nebeneinander in einem horizontalen Teil des Verlegeschlitzes verlegt, wohingegen die zweite Einführung im Wesentlichen zum Verlegen von Blitzschutzkabeln, Warnbändern, Abdeckplatten o. dgl. verwendet wird.

Je nach Art der zu verlegenden Strangmaterialien, z. B. bei Stromkabeln, insbesondere Hochspannungskabel, kommt es auf die genaue Positionierung des Strangmaterials, insbesondere auf die Lagezuordnung der verlegten Strangmaterialien, an. Es hat sich gezeigt, dass Verlegeungenauigkeiten mit herkömmlichen Verlegevorrichtung nicht immer ausgeschlossen werden können. Untersuchungen haben ergeben, dass Abweichungen besonders dann aufgetreten sind, wenn die Verlegevorrichtung aufgrund von Bodenbeschaffungen nicht vollkommen gerade bewegt werden konnte. Da in manchen Fällen eine Kurvenverlegung aufgrund von bestimmten Bodenbeschaffungen, wie etwa Hindernisse in Form von Felsen o. dgl., unvermeidbar ist, können sich daher die Strangmaterialien in Querrichtung verschieben, wodurch der erforderliche Mindestabstand nicht mehr erfüllt ist.

Die Druckschrift US 2007/286681 A1 offenbart eine Verlegevorrichtung mit einer Verlegeschlitzausbildungseinrichtung in Form eines Pflugs mit Hohlgehäuse. Der Pflug wird von einem Bagger durch das Erdreich gezogen, indem der Bagger den Pflug mit seiner Schaufel an der Hinterkante und einer am Hohlgehäuse befestigen Platte greift. Eine schaufelförmige Nase und ein gekrümmter vorderer Abschnitt bilden den Verlegeschlitz im Erdreich aus, auf dessen Sohle zwei flexible Strangmaterialien abgelegt werden, die durch voneinander bogenförmig getrennt verlaufende Durchgänge im Hohlgehäuse geführt werden.

Daher liegt der vorliegenden Erfindung ausgehende von dem vorstehend erläuterten Problem die Aufgabe zugrunde, eine Verlegevorrichtung und eine erste Einführung bzw. Primäreinführung für eine Verlegevorrichtung bereitzustellen, durch die besonders formstabile Strangmaterialien dergestalt verlegt werden können, dass Verlegeungenauigkeiten in beliebigem Erdreich vermieden werden können.

Die Aufgabe wird durch eine Verlegevorrichtung mit den Merkmalen des Anspruchs 1 und durch eine Primäreinführung für eine Verlegevorrichtung mit den Merkmalen des Anspruchs 9 gelöst. Vorteilhafte Weiterbildungen sind Gegenstand abhängiger Ansprüche.

Nachfolgende Richtungsangeben wie "Vertikalrichtung", "Längsrichtung" bzw. "Schlepprichtung", "oben", "seitlich", o. dgl. beziehen sich auf einen Zustand, in dem sich eine Verlegevorrichtung in einer Arbeitsstellung befindet, d. h. ein Zustand, in dem die Verlegevorrichtung an einem Trägerfahrzeug angebracht ist und von diesem durch eine Zugmaschine o. dgl. während eines Verlegevorgangs durch das Erdreich gezogen wird.

Erfindungsgemäß werden die Strangmaterialien nicht mehr flach auf einer Sohle eines durch eine Verlegeschlitzausbildungseinrichtung erzeugten Verlegeschlitzes abgelegt, sondern in jeweilige, in die Sohle geschnittene bzw. geformte Verlegefurchen bzw. Verlegespuren eingebracht. Dafür ist jeder Austrittsöffnung in Schlepprichtung erfindungsgemäß zumindest eine eigene vorlaufende Schneidflosse zum Schneiden bzw. Formen der Verlegespuren zugeordnet, die um ein vorbestimmtes Versetzungsmaß unterhalb einer Sohle des Verlegeschlitzes angeordnet ist. Die Sohle bildet einen Gleituntergrund für die Verlegevorrichtung. Da die Schneidflossen in Schlepprichtung zu den Austrittsöffnungen vorlaufend gebildet sind, werden mehrere, der Anzahl der Schneidflossen entsprechende Verlegespuren durch die Schneidflosse unterhalb der Sohle des Verlegeschlitzes gebildet, in die jeweils das zu verlegende Strangmaterial abgelegt wird, d. h. da die Schneidflosse tiefer als die Sohle liegen, wird je nach Anzahl der Schneidflossen, in Schlepprichtung gesehen, ein gabel- oder rechenförmiger Verlegeschlitz ausbildet. Durch diesen Verlegevorgang werden zwei Verlegespuren durch eine Erderhebung horizontal voneinander getrennt. Wenn die Verlegevorrichtung eine bogenförmige Bewegung durchlaufen muss, kann das Erdreich zwischen den Verlegespuren dazu genutzt werden, die auf das Strangmaterial in der Außenkurve einwirkenden Seitenkräfte aufzunehmen, wodurch verhindert wird, dass sich das in ihnen abgelegte Strangmaterial in Querrichtung verschieben kann. Dadurch wird eine horizontal unverrückbare Positionierung der Strangmaterialien gewährleistet.

In der einfachsten Ausführungsform werden in die flache Sohle wenigstens einer Anzahl der Strangmaterialien entsprechende Verlegespuren geschnitten.

Eine Verlegevorrichtung mit den Merkmalen des Anspruchs 2 bzw. des Anspruchs 10 hat einen Vorteil, dass die Erzeugung der Verlegespuren keine direkt vorlaufend gebildete Sohle benötigt, wodurch nur eine schmale Sohle geschnitten und weniger Verdrängungsenergie aufgewendet werden muss.

Die Primäreinführung kann sich in einer bevorzugten Ausführungsform hinter einer Eintrittsstrecke gabelförmig auseinanderlaufend in voneinander getrennte Primäreinführungsverlängerungen verzweigen. Diese Primäreinführungsverlängerungen weisen Austrittsöffnungen zum Ausführen des Strangmaterials auf, die in Vertikalrichtung unterhalb einer Sohle eines Verlegeschlitzes liegen. Dadurch werden die Strangmaterialien direkt in die entsprechenden Verlegespuren geführt, wodurch eine ordnungsgemäße Verlegung der Strangmaterialien gewährleistet wird.

Dazu kann in einer bevorzugten Ausführungsform jede Primäreinführungsverlängerung so ausgebildet sein, dass sie das betreffende Strangmaterial durchgehend führt, wodurch verhindert werden kann, dass sich die Strangmaterialien, die durch das Hohlgehäuse der Primäreinführung geführt werden, beim Verlegevorgang, bei dem die Verlegevorrichtung in Schlepprichtung durch das Erdreich gezogen wird und die Strangmaterialien gleichzeitig durch die Primäreinführung in den Verlegeschlitz geführt werden, nicht gegenseitig negativ beeinträchtigen.

Die Primäreinführung kann in der bevorzugten Ausführungsform horizontal begrenzt verschwenkbar an der Verlegeschlitzausbildungseinrichtung angelenkt sein, kann aber auch z. B. über ein weiteres Zwischenelement o. dgl. an der Verlegeschlitzausbildungseinrichtung angelenkt sein.

Des Weiteren können in der einfachsten Ausführungsform die Austrittsöffnungen durch den vorstehend beschriebenen Aufbau der Verlegevorrichtung nebeneinander in definierten Abständen angeordnet sein. Diese Anordnung der Austrittsöffnungen zusammen mit der Ausbildung der den jeweiligen Strangmaterialien entsprechenden Verlegespuren gewährleistet die Einhaltung eines vorgeschriebenen Mindestabstands zwischen den in den Verlegespuren nebeneinanderliegenden Strangmaterialien. Die Austrittsöffnungen können aber auch zueinander versetzt in Vertikalrichtung in unterschiedlichen Ebenen angeordnet sein.

Ferner kann in einer Ausführungsform das Versetzungsmaß der Verlegevorrichtung auf die Festigkeit des Erdreichs abgestimmt sein. Um das Strangmaterial an einer Querverschiebung zu hindern, muss die Erderhebung zwischen zwei Verlegespuren den Anforderungen entsprechend stabil sein, was u. a. durch eine geeignete Tiefe der Verlegespuren erreicht werden kann. Dabei hängt die Stabilität von der Beschaffenheit und der Festigkeit des Erdreichs ab. D. h. bei weichem, instabilen Erdreich wie z. B. sandigen Böden o. dgl. müssen die Verlegespuren, also das Versetzungsmaß, dementsprechend tief gewählt werden, wobei bei hartem, formfesten Erdreich die Verlegespuren flacher gewählt werden können. Dadurch kann zusätzlich der Energieeintrag vermindert werden.

Die vorlaufenden Schneidflossen können in der bevorzugten Ausführungsform an Fußenden der Primäreinführungsverlängerungen und/oder an einem Schwertschuh der Verlegeschlitzausbildungseinrichtung angeordnet sein. Jedoch können sie auch an einem beliebigen Abschnitt entlang der Verlegevorrichtung oder auch an mehreren von den genannten Positionen angeordnet sein, sofern sie vorlaufend zu den Austrittsöffnungen in Schlepprichtung liegen.

Darüber hinaus kann in der bevorzugten Ausführungsform an den Schneidflossen schlepprichtungsseitig jeweils wenigstens ein Flossenelement zur weiteren Verbesserung der Spurbildung vorgesehen sein. Die Flossenelemente können weiterhin jeweils eine, in einer Seitenansicht gesehen, spitz nach vorne unten zulaufende Spitze aufweist. Durch diese Flossenelemente ist es möglich, eine Schneidwirkung der Schneidflossen weiter zu verbessern. Da die Flossenelemente in Schlepprichtung an den Schneidflossen vorlaufend angeordnet sind, werden sie bei der Spurbildung am stärksten beeinträchtigt und abgenutzt. Daher können die Flossenelemente austauschbar ausgebildet sein, um sie bei zu großer Abnutzung mit wenig Aufwand austauschen zu können. Des Weiteren können so einfach bestimmte Flossenelemente für unterschiedliches Erdreich verwendet werden, wodurch die Spurbildung weiter verbessert und gegebenenfalls Material- und Zeitaufwand sowie Kosten verringert werden können.

Die Primäreinführungsverlängerungen nach der bevorzugten Ausführungsform laufen nach außen gabelförmig auseinander. Wenn sich die Verlegevorrichtung durch das Erdreich bewegt, wirken somit vom zu verschiebenden Erdreich starke Kräfte auf die Primäreinführungsverlängerungen, wodurch sie nach innen gedrückt werden. Dadurch kann ein vorherbestimmter Abstand nicht mehr gewährleistet und die Verlegevorrichtung gegebenenfalls beschädigt werden. Daher können die Primäreinführungsverlängerungen in der bevorzugten Ausführungsform horizontal mittels einer Plattenkonstruktion versteift sein. Die Plattenkonstruktion liegt dabei oberhalb der Austrittsöffnungen, so dass die Spurbildung nicht beeinträchtigt und die Plattenkonstruktion nicht beschädigt wird.

Je nach Art der Strangmaterialien kann es auf verschiedene Arten, wie z. B. nebeneinander, hintereinander, gebündelt, o. dgl., am oberseitigen Kopfende der Primäreinführung eingeführt und am Fußende ausgeführt werden. Da im Hinblick auf die bevorzugte Anwendung formstabile Strangmaterialien mit relativ großen Durchmessern verlegt werden, werden die Strangmaterialien in der bevorzugten Ausführungsform zunächst in Schlepprichtung am oberseitigen Kopfende der Primäreinführung hintereinander eingeführt und anschließend durch die Austrittsöffnungen an den Fußenden der Primäreinführungsverlängerungen horizontal nebeneinander ausgeführt, d. h. die Strangmaterialien müssen im Verlauf durch das Hohlgehäuse der Primäreinführung aneinander vorbeigeführt werden. Da die Primäreinführung vorzugsweise schmal sein soll, um einen Widerstand durch das zur Seite zu verschiebende Erdreich entlang von Seitenflächen der Verlegevorrichtung gering zu halten, können sich die Primäreinführungsverlängerungen in der bevorzugten Ausführungsform an einem Verzweigungsabschnitt in Schlepprichtung hinter der Eintrittsstrecke jeweils in verschiedenen Höhen verzweigen. Dadurch kann sich die Primäreinführung an einem Abschnitt gabelförmig auseinanderlaufend verzweigen, an dem die Strangmaterialien übereinanderliegen, wodurch sie in einem Vertikalbereich des Verlegeschlitzes relativ schmal ausgelegt werden kann.

Eine erfindungsgemäße Verlegevorrichtung und Primäreinführung für eine Verlegevorrichtung sind so ausgelegt, dass jeder Austrittsöffnung der Primäreinführung wenigstens eine eigene Schneidflosse zugeordnet ist, die unterhalb einer Sohle eines Verlegeschlitzes liegt, wodurch, in Schlepprichtung gesehen, ein gabel- oder rechenförmiger Verlegeschlitz geformt wird. Dadurch werden bei einem Verlegevorgang Verlegespuren gebildet, in die das Strangmaterial aufgenommen und wodurch das Strangmaterial horizontal begrenzt wird. Zur Bildung der Verlegespuren können die Austrittsöffnungen an gabelförmig voneinander getrennt verzweigten Primäreinführungsverlängerungen liegen, die unterhalb der Sohle verlaufen und somit das Strangmaterial direkt in eine durch die entsprechende Schneidflosse erzeugte Verlegespur geführt werden kann. Des Weiteren kann die Primäreinführung eine einer ihr nachlaufende, geschleppte Sekundäreinführung zum Einführen zumindest eines flexiblen weiteren Strangmaterials in den Verlegeschlitz in einem vertikalen Mindestabstand oberhalb des ersten Strangmaterials aufweisen. Die Sekundäreinführung kann Erdreich verdrängen und auf- und abwärts schwenkverstellbar sein.

Die vorliegende Erfindung hat den weiteren Vorteil, dass sie an Funktionalität durch bekannte Einführungen, Verdränger, o. dgl. wie z. b. einer wie in der EP 3327203 A1 offenbarten zweiten Einführen ergänzt werden kann. Hinsichtlich der Gestaltung der Verlegevorrichtung mit Ergänzungen bekannter Funktionen wird auf die EP 3327203 A1 und die EP 3327204 A1 verwiesen, deren Offenbarungen in ihrer Gesamtheit ausdrücklich hier eingeschlossen sind.

Nachfolgend wird Anhand der Zeichnungen eine bevorzugte Ausführungsform einer erfindungsgemäßen Verlegevorrichtung und Primäreinführung für eine Verlegevorrichtung beschrieben, wobei
Fig. 1 eine Seitenansicht eines Verlegesystems mit einer erfindungsgemäßen Verlegevorrichtung in einer Arbeitsstellung zeigt;
Fig. 2 ein Schnitt entlang einer Linie A-A in Fig. 1 ist, die eine Hinteransicht einer erfindungsgemäßen Verlegevorrichtung in einer bevorzugten Ausführungsform zeigt;
Fig. 3 eine Vorderansicht B in Fig. 1 ist, die die der erfindungsgemäße Verlegevorrichtung in einer bevorzugten Ausführungsform zeigt;
Fig. 4a eine schematische Darstellung zeigt, die einen Querschnitt eines durch eine erfindungsgemäße Verlegevorrichtung erzeugten Verlegeschlitzes mit darin verlegtem Strangmaterial darstellt;
Fig. 4b eine schematische Darstellung zeigt, die einen Querschnitt eines durch eine herkömmliche Verlegevorrichtung erzeugten Verlegeschlitzes mit darin verlegtem Strangmaterial darstellt;
Fig. 4c eine schematische Darstellung zeigt, die eine Draufsicht von zwei in Verlegespuren durch eine erfindungsgemäße Verlegevorrichtung verlegten Strangmaterialien und Kräfte als Pfeile darstellt, die auf das im Bogen Außenlaufende der beiden Strangmaterialien wirken;
Fig. 5 eine Seitenansicht der erfindungsgemäßen Verlegevorrichtung in der bevorzugten Ausführungsform zeigt;
Fig. 6 eine perspektivische Ansicht der erfindungsgemäßen Verlegevorrichtung in der bevorzugten Ausführungsform zeigt;
Fig. 7 eine perspektivische Ansicht der erfindungsgemäßen Verlegevorrichtung in der bevorzugten Ausführungsform zeigt; und
Fig. 8 eine Seitenansicht der erfindungsgemäßen Verlegevorrichtung in einer anderen Ausführungsform in der Arbeitsstellung zeigt;

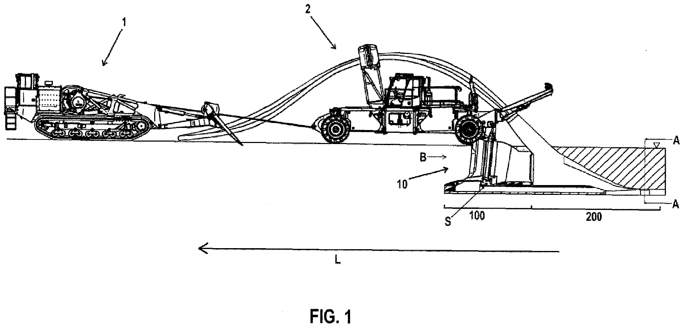

Fig. 1 zeigt eine Seitenansicht eines Verlegesystems mit einem Zugfahrzeug 1, einem vom Zugfahrzeug 1 über ein Zugseil gezogenes Trägerfahrzeug 2 und einer vom Trägerfahrzeug 1 getragenen und in Schlepprichtung geschleppten Verlegevorrichtung 10, wobei die Verlegevorrichtung 10 in ihrer Arbeitsstellung gezeigt wird, in der die Verlegevorrichtung 10 in das Erdreich versenkt ist.

In der Beschreibung und/oder in den Figuren verwendete Richtungsangaben, wie "Höhen- oder Vertikalrichtung" oder "vertikal", "horizontal", "vorne", "hinten" oder dergleichen beziehen sich auf einen Zustand, in dem sich die Verlegevorrichtung 10 in ihrer Arbeitsstellung befindet. In der Arbeitsstellung deckt sich die "Vertikalrichtung" oder die "Höhenrichtung" der Verlegevorrichtung 10 mit der Vertikalen auf die Erdoberfläche bzw. mit der Lotrichtung. Die "Längsrichtung" L der Verlegevorrichtung 10 stimmt mit der Schlepprichtung L überein.

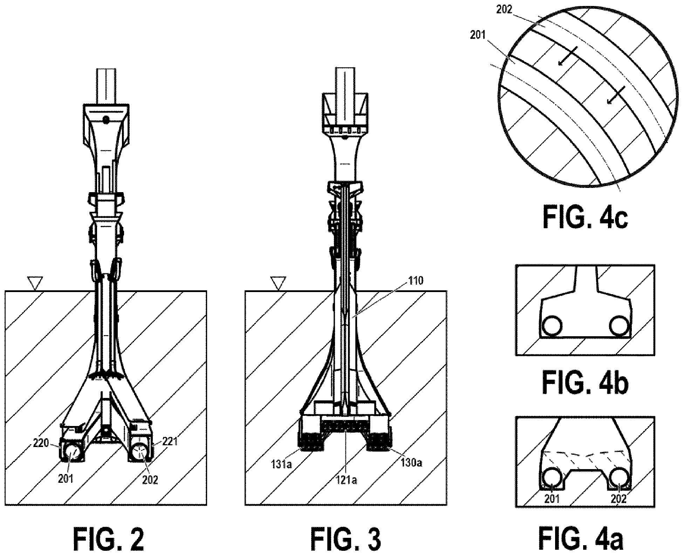

Fig. 2 ist eine Hinteransicht einer erfindungsgemäßen Verlegevorrichtung 10 entlang einem Schnitt einer Linie A-A in Fig. 1 und Fig. 3 eine Vorderansicht B der erfindungsgemäßen Verlegevorrichtung 10 in Fig. 1. Fig. 2 bzw. Fig. 3 zeigen eine Hinteransicht bzw. Vorderansicht einer erfindungsgemäßen Verlegevorrichtung 10 in einer bevorzugten Ausführungsform, die in das Erdreich versenkt ist. Fig. 4a stellt eine schematische Darstellung eines Querschnitts eines durch eine erfindungsgemäße Verlegevorrichtung 10 erzeugten gabelförmigen Verlegeschlitzes und Fig. 4b eine schematische Darstellung eines Querschnitts eines durch eine herkömmliche Verlegevorrichtung erzeugten T-förmigen Verlegeschlitzes mit jeweils darin verlegtem Strangmaterial dar, wobei die Strichlinie in Fig. 4a (nachfolgend beschriebenes) verdichtetes Erdreich darstellen, das während einem Verlegevorgang auf das Strangmaterial aufgebracht wird. Fig. 4c stellt schematische Darstellung einer Draufsicht von zwei in Verlegespuren T durch eine erfindungsgemäße Verlegevorrichtung 10 verlegten Strangmaterialien 201, 202 und nach innen drängende Kräfte als Pfeile dar, die auf das im Bogen Außenlaufende der beiden Strangmaterialien 202 wirken.

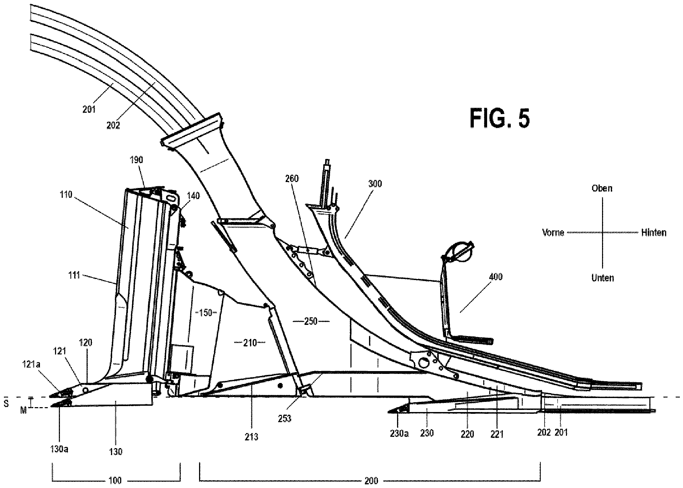

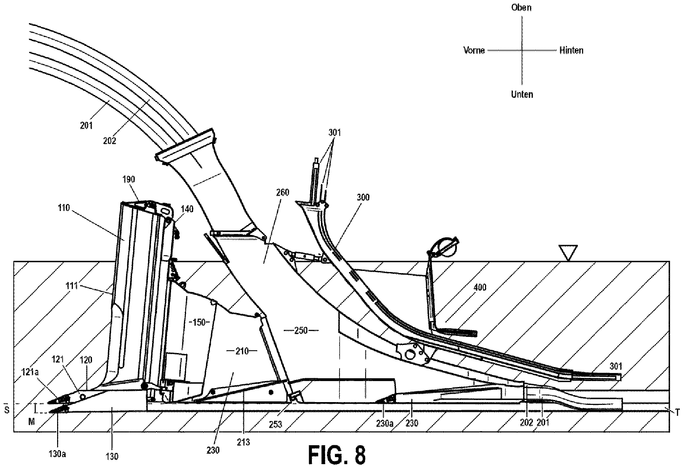

Fig. 5 bis Fig. 7 zeigen eine bevorzugte Ausführungsform der erfindungsgemäßen Verlegevorrichtung 10. Fig. 8 zeigt eine andere Ausführungsform der erfindungsgemäßen Verlegevorrichtung 10. In den gezeigten Ausführungsformen weist die Verlegevorrichtung 10 - von vorne nach hinten gesehen - eine sich in Vertikalrichtung der Verlegevorrichtung 10 erstreckende Verlegeschlitzausbildungseinrichtung 100 zum Ausbilden eines Verlegeschlitzes im Erdreich, eine in Schlepp- oder Längsrichtung L der Verlegevorrichtung 10 der Verlegeschlitzausbildungseinrichtung 100 nachlaufende, geschleppte Einführung bzw. Primäreinführung 200 zum Einführen zwei flexibler Strangmaterialien 201, 202, wie z. B. Hochspannungskabeln, in den Verlegeschlitz, und eine der Primäreinführung 200 nachlaufende, geschleppte zweite Einführung bzw. Sekundäreinführung 300 zum Einführen weiterer flexibler Strangmaterialien 301, wie z.B. Abdeckplatten, in den Verlegeschlitz oberhalb der Strangmaterialien 201, 202 auf.

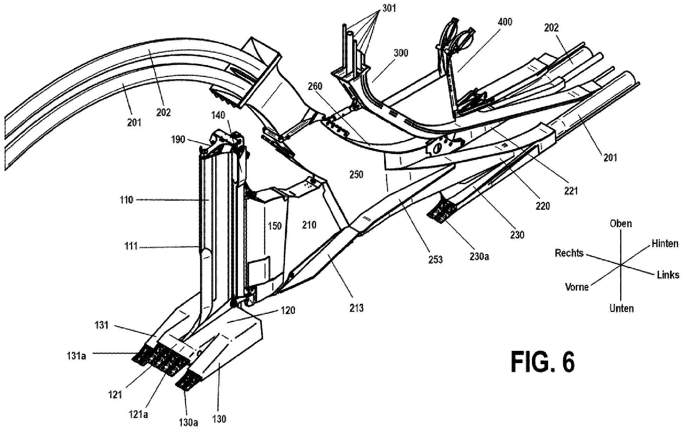

Wie z. B. in Fig. 6 zu sehen ist, werden die Strangmaterialien 201, 202 und weitere Strangmaterialien 301 im Besonderen so verlegt, dass die Strangmaterialien 301 vertikal oberhalb der Strangmaterialien 201, 202 verlegt werden. Dabei werden die ersten Strangmaterialien 201, 202 unterhalb einer Sohle S des durch die Verlegeschlitzausbildungseinrichtung 100 ausgebildeten Verlegeschlitzes horizontal nebeneinander abgelegt, was nachfolgend beschrieben wird, während die weiteren Strangmaterialien 301 in einem vorgegebenen Abstand vertikal oberhalb der ersten Strangmaterialien 201, 202 horizontal nebeneinander verlegt werden.

Die Verlegeschlitzausbildungseinrichtung 100 hat, wie es in Fig. 5 bis Fig. 8 gezeigt ist, ein in Schlepprichtung L vorauslaufendes Schwert 110 und ein an der Rückseite des Schwertes 110 angehängtes Verdrängersegment 150.

Das Schwert 110 ist nach dem Vorbild des in der EP 3327204 A1 beschriebenen Schwerts aus einem Schwertkörper 111, einer am Kopf des Rumpfs 111 befestigten Halterung 190, über die die Verlegevorrichtung 10 an dem in Fig. 1 gezeigten Trägerfahrzeug 2 gehalten wird, einem am Fuß des Schwertkörpers 111 um eine horizontale Achse 171 auf- und abwärts schwenkbar angelenkten Schwertschuh 120 und einer an der Rückseite des Rumpfs 111 gehaltenen Hohlprofilführung 140, in der ein (nicht detailliert gezeigter) Stellantrieb zur Schwenkbetätigung des Schwertschuhs 170 angeordnet ist, gebildet.

Über den auf- und abwärts schwenkbaren Schwertschuh 120 kann die Eindringtiefe der Verlegevorrichtung 10 in das Erdreich beeinflusst oder korrigiert werden. Der Schwertschuh 120 weist, wie es in Fig. 6 gezeigt ist, eine den Schwertkörper 111 umgreifende Schneidflosse 121, deren Unterseite in Arbeitsstellung auf der Sohle S der Verlegeschlitzes liegt, und Schneidflossen 130, 131 auf, die ihrerseits die Schneidflosse 121 beidseitig umgreifen und unterhalb von ihr angeordnet sind. Weiterhin weist der Schwertschuh 120 in Schlepprichtung L sich verjüngend angeordnete Schneiden bzw. Flossenelemente 121a, 130a, 131a auf, die, in einer Seitenansicht gesehen, jeweils spitz nach unten zulaufen. Diese Gestaltung bietet die Möglichkeit, die Flossenelemente 121a, 130a, 131a beispielsweise austauschbar an den Vorderseiten der Schneidflossen 121, 130, 131 anzubringen, um sie beispielsweise im Verschleißfall austauschen zu können. Durch den Schwertschuh 120 und die Schneidflossen 130, 131 erhält der durch das Schwert 110 erzeugte, sich in das Erdreich erstreckende Verlegeschlitz bereits einen umgekehrt gabelförmigen Querschnitt.

Das Verdrängersegment 150 ist nach dem Vorbild der in der EP 3327204 A1 angegebenen Verdrängervorrichtung als ein Schweißkörper ausgeführt und an der Rückseite der Hohlprofilführung 140 des Schwerts 110 um eine in etwa vertikale Schwenkachse 151 seitlich schwenkbar angelenkt. Das Verdrängersegment 150 hat die Funktion, den durch das Schwert 110 erzeugten Verlegeschlitz im Bereich oberhalb des Schwertschuhs 170 seitlich zu verbreitern und einen Zwischenraum zwischen dem Schwert 110 und der Primäreinführung 200 zu überbrücken.

Die Primäreinführung 200 ist eine Weiterbildung der in der EP 3327204 A1 offenbarten Einführung und daher werden Merkmale der Primäreinführung 200, die mit denen der offenbarten Einführung übereinstimmen, nicht im Detail beschrieben.

Die Primäreinführung 200 ist aus einem in Schlepprichtung L vorauslaufenden Einführungsadapter 210 und einem nachlaufenden Hohlgehäuse 250 gebildet, das sich in der bevorzugten Ausführungsform hinter einer Eintrittsstrecke gabelförmig auseinanderlaufend in voneinander getrennte Primäreinführungsverlängerungen 220, 221 verzweigt.

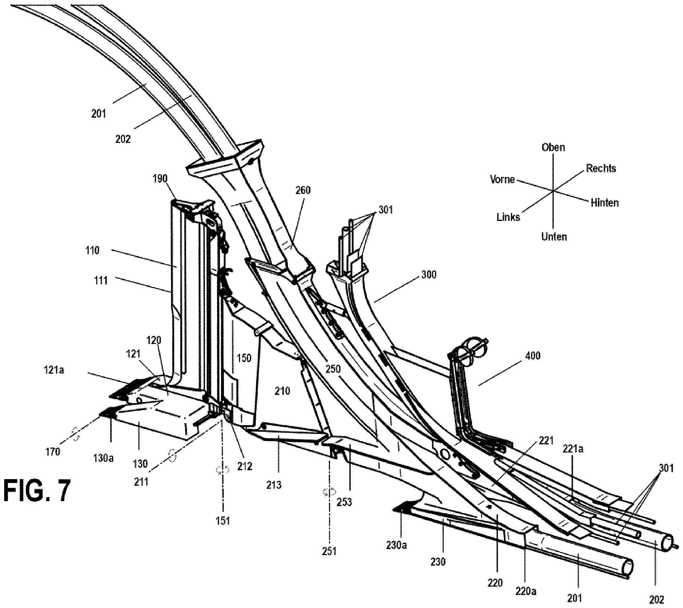

Der Einführungsadapter 210 ist als ein Hohlgehäuse, z.B. als Schweißkonstruktion, ausgebildet und wird von dem vorauslaufenden Verdrängersegment 150 schürzenartig umgriffen. Durch das schürzenartige Umgreifen des Verdrängersegments 150 kann vermieden werden, dass Erde, insbesondere Sand oder Kies, zwischen das Verdrängersegment 150 und den Einführungsadapter 210 fällt und sich festsetzt, wodurch die Bewegbarkeit der einzelnen Teile eingeschränkt bzw. verhindert wird. Der Einführungsadapter 210 ist an einem in Schlepprichtung L ragenden Bugabschnitt 212 (vgl. Fig. 7) an dem Verdrängersegment 150 um eine horizontale Schwenkachse 211 auf- und abwärts schwenkbar angelenkt. Der Schwenkbereich des Einführungsadapters 210 kann durch einen (nicht gezeigten) Stellzylinder, der zwischen dem Schwert 110 und dem später beschriebenen Hohlgehäuse 250 der Primäreinführung angeordnet ist, geregelt oder begrenzt werden.

Des Weiteren weist der Einführungsadapter 210 beidseitig Schaufelelemente 213, 214 (vgl. Fig. 6) mit jeweils einer schräg nach vorne unten geneigten Schaufelfläche im Wesentlichen über seine gesamte Länge in Schlepprichtung L auf. Die in Schlepprichtung L vorderen Enden der Schaufelelemente 213, 214 liegen im Wesentlichen auf Höhe der Sohle S. Die Schaufelelemente 213, 214 erleichtern die horizontale Verbreiterung des Verlegeschlitzes. Des Weiteren trägt die schräg nach vorne unten geneigte Form der Schaufelflächen dazu bei, dass die Schaufelelemente 213, 214 Erde nach oben verdrängen und dadurch der Einführungsadapter 210 eine Kraft in Vertikalrichtung nach unten erfährt. Dadurch wird erreicht, dass der Einführungsadapter 210 gegen die Sohle S gedrückt wird und nicht durch Steine oder dergleichen im Erdreich nach oben wandert. Des Weiteren wird das durch die Schaufelelemente 213, 214 nach oben verdrängte Erdreich während dem Verlegevorgang über die Schaufelelemente 213, 214 und weitere Schaufelelemente 253, 254 nach hinten weitergeleitet, was nachfolgend beschrieben wird.

Der Einführungsadapter 210 ist, wie es in Fig. 5 gezeigt ist, relativ zum Schwert 110 so angeordnet, dass seine Unterseite oder Fußsohle im Wesentlichen auf der Sohle S läuft. Dadurch wird eine Glättung eines vom Einführungsadapter 210 überstrichenen Teils der Sohle S des durch das Schwert 110 erzeugten Verlegeschlitzes erreicht.

Das Hohlgehäuse 250 der ersten Einführung ist in den gezeigten Ausführungsformen wie der Einführungsadapter 220 als eine Schweißkonstruktion ausgebildet. Das Hohlgehäuse 250 ist an dem Einführungsadapter 210 um eine gegenüber der Vertikalen leicht schräg liegende Schwenkachse 251 seitlich schwenkbar angelenkt. Diese Schwenkachse 251 trägt dazu bei, die Schwenkbeweglichkeit der Primäreinführung 200 zu erhöhen.

Wie in den Fig. 6 und 7 zu sehen ist, lässt sich das Hohlgehäuse 250 in der bevorzugten Ausführungsform im Besonderen in einen sich in Vertikalrichtung der Verlegevorrichtung 10 erstreckenden Rumpf 260, die beidseitig vom Hohlgehäuse 250 angeordneten Schaufelelemente 253, 254 mit einer schräg nach vorne unten geneigten Schaufelfläche, hinter der Eintrittsstrecke gabelförmig auseinanderlaufend und voneinander getrennte Primäreinführungsverlängerungen 220, 221 und an den Fußenden der Primäreinführungsverlängerungen 220, 221 seitlich auskragende Flossen 230, 231 unterteilen. Die in Schlepprichtung L vorderen Enden der Schaufelelemente 253, 254 sind im Wesentlichen auf gleicher Höhe wie die in Schlepprichtung L hinteren Enden der Schaufelelemente 213, 214 und grenzen an sie an. Wie bei den Schaufelelemente 213, 214 kann durch die Schaufelelemente 253, 254 somit einerseits erreicht werden, dass ein in Schlepprichtung L vorderer Abschnitt der Primäreinführung 200 gegen die Sohle S gedrückt und dadurch daran gehindert wird, nach oben zu wandern. Andererseits kann dadurch erreicht werden, dass die aus Austrittsöffnungen 220a, 221a des der Primäreinführungsverlängerungen 220, 221 austretenden Strangmaterialien 201, 202 sicher auf geglätteten Verlegespuren T abgelegt sowie die von den Schaufelelementen 213, 214 verdrängte Erde weitergeleitet werden, was nachfolgend beschrieben wird. Ferner hat der Rumpf 260 eine Breite, die im Wesentlichen der Breite des vorauslaufenden Einführungsadapters 210 entspricht, so dass er innerhalb der durch das Verdrängersegment 150 bestimmten Breite des Verlegeschlitzes läuft.

Die gabelförmig auseinanderlaufenden Primäreinführungsverlängerungen 220, 221 in der bevorzugten Ausführungsform (vgl. Fig. 7) verzweigen sich hinter der Eintrittsstrecke an einem Verzweigungsabschnitt und verlaufen von dort jeweils schräg nach außen und unten in Richtung ihrer in Schlepprichtung L hinteren Enden, wobei die Eintrittsstrecke eine Strecke zwischen einer Eintrittsöffnung am oberseitigen Kopfende der Primäreinführung (200) und dem Verzweigungsabschnitt ist. An ihren in Schlepprichtung L hinteren Enden weisen die Primäreinführungsverlängerungen 220, 221 jeweils eine in Schlepprichtung L nach hinten offene Austrittsöffnung 220a, 221a auf, die durch die schräg nach unten verlaufenden Primäreinführungsverlängerungen 220, 221 unterhalb der Sohle S liegt.

In der bevorzugten Ausführungsform sind zwei (nicht gezeigte) Führungsschächte ausgebildet, die jeweils zwischen einer Eintrittsöffnung vorne oben am Hohlgehäuse 250 und der Austrittsöffnung 220a, 221a einer Primäreinführungsverlängerung 220, 221 bogenförmig verlaufen. Die Führungsschächte verlaufen voneinander getrennt zwischen den Eintrittsöffnungen und den Austrittsöffnungen220a, 221a, wobei jede Primäreinführungsverlängerung 220, 221 das betreffende Strangmaterial 201, 202 durchgehend führen kann. Die Bogenform des Führungsschachts ist dabei so gewählt, dass ein minimal zulässiger Biegeradius der Strangmaterialien 201, 202 nicht unterschritten wird.

An den Fußenden der Primäreinführungsverlängerungen 220, 221 in Schlepprichtung L vor den Austrittsöffnung 220a, 221a sind jeweils Schneidflossen 230, 231 angeordnet. Die Unterseiten der Schneidflossen 230, 231 verlaufen jeweils auf Höhe der Unterseiten der Austrittsöffnung 220a, 221a und ihren Längen nach entlang der Schlepprichtung L, wodurch sie an ihren in Schlepprichtung hinteren Enden bündig in die entsprechende Primäreinführungsverlängerungen 220, 221 übergehen. Aufgrund der schräg nach außen verlaufenden Primäreinführungsverlängerungen 220, 221 kragen die Schneidflossen 230, 231 somit an ihren in Schlepprichtung L vorderen Enden relativ zu den Primäreinführungsverlängerungen 220, 221 seitlich aus. An den in Schlepprichtung L vorderen Enden weisen die Schneidflossen 230, 231 Flossenelemente 230a, 231a auf, die ähnlich wie die Flossenelemente 121a, 130a, 131a, in einer Seitenansicht gesehen, jeweils spitz nach unten zulaufen. Des Weiteren verlaufen die Schneidflossen 230, 231 jeweils in Schlepprichtung L im Wesentlichen hinter den Schneidflossen 130, 131 (vgl. Fig. 5) und liegen in Vertikalrichtung etwas unterhalb der Schneidflossen 130, 131.

Wenn die Verlegevorrichtung 10, wie in Fig. 1 gezeigt ist, in ihrer Arbeitsstellung durch das Erdreich gezogen wird, wird der Verlegeschlitz insbesondere durch die Verlegeschlitzausbildungseinrichtung 100 und die Schneidflossen 130, 131, 230, 231 erzeugt. Da die Schneidflossen 130, 131, 230, 231 seitlich unterhalb der Sohle S des Verlegeschlitzes liegen, formen sie dabei mit Hilfe der Flossenelemente 130a, 131a, 230a, 231a zwei voneinander getrennte Verlegespuren T im Verlegeschlitz, in die, wie nachfolgend beschrieben, das Strangmaterial 201, 202 jeweils angeordnet werden kann. Wie in den Fig. 2, Fig. 3 und der schematischen Darstellung in Fig. 4a zu sehen ist, erhält der durch die Verlegeschlitzausbildungseinrichtung 100 und die Schneidflossen 130, 131, 230, 231 dergestalt erzeugte, sich in das Erdreich erstreckende Verlegeschlitz einen umgekehrt gabelförmigen Querschnitt. Fig. 4b zeigt derweil einen herkömmlichen T-förmigen Verlegeschlitz.

Wie es in Fig. 6 und Fig. 7 gezeigt ist, sind die Eintrittsöffnungen der beiden Führungsschächte in Schlepprichtung L hintereinander und die Austrittsöffnungen 220a, 221a der zwei Primäreinführungsverlängerungen 220, 221 horizontal oder seitlich nebeneinander angeordnet. Dadurch können die zwei Strangmaterialien 201, 202 in Schlepprichtung L der Verlegevorrichtung 10 hintereinander in den Rumpf 260 des Hohlgehäuses 250 der Primäreinführung 200 eintreten und horizontal beabstandet an den beiden Austrittsöffnungen 220a, 221a der Primäreinführungsverlängerungen 220, 221 austreten und jeweils in die Verlegespuren T des umgekehrten gabelförmigen Verlegeschlitz abgelegt werden (vgl. Fig. 2). Da die Strangmaterialien 201, 202 jeweils in den Verlegespuren T angeordnet sind, sind sie somit horizontal voneinander in vorherbestimmten Abständen getrennt und durch das angrenzende erhöhte Erdreich dergestalt eingefasst, dass sie daran gehindert werden, durch insbesondere auf das in einer außen verlaufenden Verlegespur T liegende Strangmaterial 202 wirkende Kräfte, wie es durch Pfeile in der Fig. 4c schematisch dargestellt ist, in Querrichtung verschoben zu werden. Dadurch kann ein gleichbleibender Abstand zwischen den Strangmaterialien 201, 202 gewährleistet werden, auch wenn die Strangmaterialien 201, 202 in einer Kurve verlegt werden.

Die in Fig. 8 gezeigte andere Ausführungsform unterscheidet sich von der in den Fig. 5 bis Fig. 7 gezeigten Ausführungsform darin, dass keine in Vertikalrichtung vertieften Einführungsverlängerungen 220, 221 vorgesehen sind und somit die Austrittsöffnungen 220a, 221a der Einführung 200 oberhalb der Sohle S liegen. Die Verlegespuren T werden nur durch am Schwertschuh 120 unterhalb der Sohle S angeordnete Schneidflossen 130, 131 geformt. Durch diese Anordnung fällt das Strangmaterial 201, 202 in die vorlaufend geformten Verlegespuren T. Diese Anordnung entspricht einer einfachsten Ausführungsform.

Da die Offenbarung der EP 3327203 A1 hier in ihrer Gesamtheit mit eingeschlossen ist, wird auf eine detaillierte Beschreibung einzelner Komponenten in der EP 3327203 A1 verwiesen. Die der Primäreinführung 200 nachlaufende, geschleppte Sekundäreinführung 300 ist relativ zur Primäreinführung 200 auf- und abwärts schwenkverstellbar und dient dazu, in der gezeigten Ausführungsform mehrere weitere Strangmaterialien 301, z.B. Blitzschutzkabeln, Abdeckplatten o. dgl., in oberhalb der Strangmaterialien 201, 202 zu verlegen und das oberhalb liegende Erdreich zu verdichten, welches wie vorstehend beschrieben u. a. über die Schaufelelemente 213, 214, 253, 254 nach hinten gefördert wird.

Anders als bei der in der EP 3327202 A1 offenbarten zweiten Einführung ist die Sekundäreinführung 300 an einem in Schlepprichtung L hinten liegenden Abschnitt in drei auseinanderlaufende Abschnitte unterteilt (vgl. Fig. 7), die in Schlepprichtung L nach hinten schräg nach unten verlaufen und an ihren in Schlepprichtung L hinten liegenden Enden jeweils Austrittsöffnungen für die weiteren Strangmaterialien 301 aufweisen. Die auseinanderlaufenden Abschnitte der Sekundäreinführung 300 laufen über Austrittsöffnungen 220a, 221a der Primäreinführung 200 hinaus, wobei die beiden außenliegenden auseinanderlaufenden Abschnitte das über die Schaufelelemente 213, 214, 253, 254 nach hinten gefördert Erdreich durch ihre schräg nach unten laufende Formen auf das entsprechend in den Verlegespuren T verlegte Strangmaterial 201, 202 drückt und somit verdichtet. Damit kann ein Teil des Verlegeschlitzes wieder mit Erdreich gefüllt und dieses verdichtet werden (vgl. Strichlinie in Fig. 4a), wodurch das weitere Strangmaterial 301 sicher oberhalb des Strangmaterials 201, 202 abgelegt und der Verlegeschlitz stabilisiert werden kann. Darüber hinaus ist in Schlepprichtung L hinter einer oberseitigen Einführung der Sekundäreinführung 300 eine dritte Einführung 400 an der der Sekundäreinführung 300 angeordnet, die zum Einführen von weiteren Strangmaterialien 400 wie z. B. Warnbändern vorgesehen ist.

Innerhalb des Schutzbereichs der Ansprüche sind Abweichungen von den vorstehend beschriebenen Ausführungsformen möglich, ohne vom Geist der Erfindung abzuweichen.

Die Verlegevorrichtung 10 ist in den gezeigten Ausführungsformen für die Verlegung von zwei Strangmaterialien 201, 202 ausgelegt. Jedoch kann die Verlegevorrichtung 10 aber auch für mehr als zwei Strangmaterialien ausgelegt sein.

Des Weiteren können, neben der zu den Austrittsöffnungen 220a, 221a vorlaufenden Anordnung der Schneidflossen 130, 131, 230, 231 unterhalb des Schwertschuhs 120 bzw. der Einführung 200, Schneidflossen auch an anderen Komponenten der Verlegevorrichtung 10 angeordnet sein, sofern sie unterhalb der Sohle S und zu den Austrittsöffnungen vorlaufend liegen. So können Schneidflossen z. B. auch unterhalb dem Einführungsadapter angeordnet sein.

Ferner können die jeweiligen Verlegespuren T durch zunehmende Versetzungsmaße mehrerer, jeweils hintereinander laufender Schneidflossen (wie schon in Fig. 5 angedeutet) und/oder durch zunehmende Breiten der jeweiligen hintereinander laufenden Schneidflossen in Schlepprichtung L nach hinten stufenweise geformt werden.
- L: Schlepprichtung
- M: Versetzungsmaß
- S: Sohle
- T: Verlegespur
- 10: Verlegevorrichtung
- 100: Verlegeschlitzausbildungseinrichtung
- 110: vorauslaufendes Schwert
- 111: Schwertkörper
- 120: Schwertschuh
- 121: Schneidflosse
- 121a: Flossenelement
- 130, 131: Schneidflosse
- 130a, 131a: Flossenelement
- 140: Hohlprofilführung
- 150: Verdrängersegment
- 151: vertikale Schwenkachse
- 171: horizontale Achse
- 190: Halterung
- 200: erste Einführung bzw. Primäreinführung
- 201, 202: Strangmaterial
- 210: Einführungsadapter
- 211: horizontale Schwenkachse
- 212: Bugabschnitt
- 213, 214: Schaufelelement
- 220, 221: Primäreinführungsverlängerung
- 220a, 221a: Austrittsöffnung
- 230, 231: Schneidflosse
- 230a, 231a: Flossenelement
- 250: Hohlgehäuse
- 251: leicht schräg liegende Schwenkachse
- 253, 254: Schaufelelement
- 260: Rumpf
- 300: zweite Einführung bzw. Sekundäreinführung
- 301: weiteres Strangmaterial

## Patentansprüche

1. Verlegevorrichtung (10) zur Erdverlegung flexibler Strangmaterialien, mit:
einer sich in Vertikalrichtung der Verlegevorrichtung (10) erstreckenden Verlegeschlitzausbildungseinrichtung (100) zum Ausbilden eines Verlegeschlitzes im Erdreich,
einer in Längsrichtung (L) der Verlegevorrichtung (10) der Verlegeschlitzausbildungseinrichtung (100) nachlaufenden, geschleppten Primäreinführung (200) zum Einführen mehrerer flexibler Strangmaterialien (201, 202) in den bis zu einer Sohle (S) reichenden Verlegeschlitz, mit einem Hohlgehäuse (250), das zur Führung der Strangmaterialien (201, 202) mehrere Führungsschächte, vorzugsweise eine der Zahl der zu verlegenden Strangmaterialien entsprechende Zahl von Führungsschächten, aufweist, die jeweils zwischen einer Eintrittsöffnung am oberseitigen Kopfende der Primäreinführung (200) und Austrittsöffnungen (220a, 221a) am Fußende der Primäreinführung (200) voneinander bogenförmig getrennt verlaufen,
**dadurch gekennzeichnet, dass**
jeder Austrittsöffnung (220a, 221a) zumindest eine eigene in Schlepprichtung (L) vorlaufende Schneidflosse (230, 231, 232, 233) zugeordnet ist, die um ein vorbestimmtes Versetzungsmaß (M) unterhalb der Sohle (S) des durch die Verlegeschlitzausbildungseinrichtung (100) ausgebildeten Verlegeschlitzes an der Verlegevorrichtung (10) angeordnet und durch die eine Verlegespur (T) formbar ist.

2. Verlegevorrichtung (10) nach Anspruch 1, **dadurch gekennzeichnet, dass** sich die Primäreinführung (200) hinter einer Eintrittsstrecke gabelförmig auseinanderlaufend in voneinander getrennte Primäreinführungsverlängerungen (220, 221) verzweigt, deren Austrittsöffnungen (220a, 221a) in Vertikalrichtung unterhalb der Sohle (S) des durch die Verlegeschlitzausbildungseinrichtung (100) erzeugten Verlegeschlitzes liegen.

3. Verlegevorrichtung (10) nach Anspruch 1 oder 2, **dadurch gekennzeichnet, dass** die Primäreinführung (200) horizontal begrenzt verschwenkbar an der Verlegeschlitzausbildungseinrichtung (100) anlenkbar ist.

4. Verlegevorrichtung (10) nach einem der vorhergehenden Ansprüche, **dadurch gekennzeichnet, dass** die Austrittsöffnungen (220a, 221a) nebeneinander in definierten Abständen (A) angeordnet sind.

5. Verlegevorrichtung (10) nach einem der Ansprüche 2 bis 4, **dadurch gekennzeichnet, dass** jede Primäreinführungsverlängerung (220, 221) an ihrem Fußende wenigstens eine auskragende Schneidflosse (230, 231) aufweist.

6. Verlegevorrichtung (10) nach einem der Ansprüche 2 bis 5, **dadurch gekennzeichnet, dass** ein Schwertschuh (170) der Verlegeschlitzausbildungseinrichtung (100) mehrere, wenigstens der Zahl der Primäreinführungsverlängerungen (220, 221) entsprechende, unterhalb der Sohle (S) angeordnete auskragende Schneidflossen (232, 233) aufweist.

7. Verlegevorrichtung (10) nach Anspruch 2, **dadurch gekennzeichnet, dass** jede Primäreinführungsverlängerung (220, 221) das betreffende Strangmaterial (201, 202) durchgehend führt.

8. Verlegevorrichtung (10) nach Anspruch 2, **dadurch gekennzeichnet, dass** sich die Primäreinführungsverlängerungen (220, 221) an einem Verzweigungsabschnitt hinter der Eintrittsstrecke in Vertikalrichtung jeweils in verschiedenen Höhen verzweigen.

9. Primäreinführung (200) für eine Verlegevorrichtung (10) zur Erdverlegung flexibler Strangmaterialien,
die eingerichtet ist, in Längsrichtung (L) der Verlegevorrichtung (10) einer Verlegeschlitzausbildungseinrichtung (100) zum Einführen mehrerer flexibler Strangmaterialien (201, 202) in einen bis zu einer Sohle (S) reichenden Verlegeschlitz nachzulaufen mit:
einem Hohlgehäuse (250), das zur Führung der Strangmaterialien (201, 202) mehrere Führungsschächte, vorzugsweise eine der Zahl der zu verlegenden Strangmaterialien entsprechende Zahl von Führungsschächten, aufweist, die jeweils zwischen einer Eintrittsöffnung am oberseitigen Kopfende der Primäreinführung (200) und Austrittsöffnungen (220a, 221a) am Fußende der Primäreinführung (200) voneinander bogenförmig getrennt verlaufen,
**dadurch gekennzeichnet, dass**
jeder Austrittsöffnung (220a, 221a) zumindest eine eigene in Schlepprichtung (L) vorlaufende Schneidflosse (230, 231) zugeordnet ist, die von einer auf der Sohle (S) aufliegenden Bodenfläche um ein vorbestimmtes Versetzungsmaß (M) unterhalb der Sohle (S) des Verlegeschlitzes angeordnet ist und durch die eine Verlegespur (T) in der Sohle (S) formbar ist.

10. Primäreinführung (100) nach Anspruch 9, **dadurch gekennzeichnet, dass** sie sich hinter einer Eintrittsstrecke gabelförmig auseinanderlaufend in voneinander getrennte Primäreinführungsverlängerungen (220, 221) verzweigt, deren Austrittsöffnungen (220a, 221a) in Vertikalrichtung unterhalb der Sohle (S) des Verlegeschlitzes liegen.

11. Primäreinführung (100) nach Anspruch 9 oder 10, **dadurch gekennzeichnet, dass** sie horizontal begrenzt verschwenkbar an der Verlegeschlitzausbildungseinrichtung (100) anlenkbar ist.

12. Primäreinführung (100) nach einem der Ansprüche 9 bis 11, **dadurch gekennzeichnet, dass** die Austrittsöffnungen (220a, 221a) nebeneinander in definierten Abständen (A) angeordnet sind.

13. Primäreinführung (100) nach einem der Ansprüche 10 bis 12, **dadurch gekennzeichnet, dass** jede Primäreinführungsverlängerung (220, 221) an ihrem Fußende wenigstens eine auskragende Schneidflosse (230, 231) aufweist.

14. Primäreinführung (100) nach Anspruch 10, **dadurch gekennzeichnet, dass** jede Primäreinführungsverlängerung (220, 221) das betreffende Strangmaterial (201, 202) durchgehend führt.

15. Primäreinführung (100) nach Anspruch 10, **dadurch gekennzeichnet, dass** sich die Primäreinführungsverlängerungen (220, 221) an einem Verzweigungsabschnitt hinter der Eintrittsstrecke in Vertikalrichtung jeweils in verschiedenen Höhen verzweigen.

## Claims

1. Laying device (10) for the underground insertion of flexible strand materials, with:
a laying slot formation apparatus (100) extending in vertical direction of the laying device (10) for the formation of a laying slot in the ground,
a drawn primary introduction device (200) following the laying slot formation apparatus (100) in longitudinal direction (L) of the laying device (10) for introducing several flexible strand materials (201, 202) into the laying slot which extends as far as a sole (S), with a hollow housing (250) which has several guiding shafts, preferably a number of guiding shafts corresponding to the number of the strand materials to be laid, for the guidance of the strand materials (201, 202), which extend in each case separate from one another in the manner of an arc between an inlet opening on the upper head end of the primary introduction device (200) and outlet openings (220a, 221a) at the foot end of the primary introduction device (200),
**characterised in that**
each outlet opening (220a, 221a) is assigned at least one cutting fin (230, 231, 232, 233) of its own extending in drawing direction (L), which is arranged, offset by a predetermined offset (M) below the sole (S) of the laying slot formed by the laying slot formation apparatus (100), at the laying device (10) and by means of which a laying track (T) can be formed.

2. Laying device (10) according to claim 1, **characterised in that** the primary introduction device (200) branches apart after an inlet stretch in the manner of a fork into primary introduction device extensions (220, 221) separate from one another, the outlet openings (220a, 221a) of which lie in vertical direction below the sole (S) of the laying slot generated by the laying slot formation apparatus (100).

3. Laying device (10) according to claim 1 or 2, **characterised in that** the primary introduction device (200) can be articulated on the laying slot formation apparatus (100) so as to be pivotable in a horizontally limited manner.

4. Laying device (10) according to any of the preceding claims, **characterised in that** the outlet openings (220a, 221a) are arranged next to one another at defined intervals (A).

5. Laying device (10) according to any of claims 2 to 4, **characterised in that** each primary introduction device extension (220, 221) has at its foot end at least one projecting cutting fin (230, 231).

6. Laying device (10) according to any of claims 2 to 5, **characterised in that** a ripper shoe (170) of the laying slot formation apparatus (100) has several projecting cutting fins (232, 233) corresponding at least to the number of the primary introduction device extensions (220, 221) and arranged below the sole (S).

7. Laying device (10) according to claim 2, **characterised in that** each primary introduction device extension (220, 221) guides the strand material (201, 202) concerned continuously.

8. Laying device (10) according to claim 2, **characterised in that** the primary introduction device extensions (220, 221) branch respectively at different levels at a branching portion behind the inlet stretch.

9. Primary introduction device (200) for a laying device (10) for the underground insertion of flexible strand materials,
which is configured to run in longitudinal direction after the laying device (10) of a laying slot formation apparatus (100) for the introduction of several flexible strand materials (201, 202) into a laying slot extending as far as a sole (S), with:
a hollow housing (250) which has several guiding shafts, preferably a number of guiding shafts corresponding to the number of the strand materials to be laid, for the guidance of the strand materials (201, 202), which extend in each case separate from one another in the manner of an arc between an entry opening on the upper head end of the primary introduction device (200) and outlet openings (220a, 221a) at the foot end of the primary introduction device (200),
**characterised in that**
each outlet opening (220a, 221a) is assigned at least one cutting fin (230, 231, 232, 233) of its own extending in drawing direction (L), which is arranged, offset by a predetermined offset (M) from a floor surface resting on the sole (S), below the sole (S) of the laying slot and by means of which a laying track (T) can be formed in the sole (S).

10. Primary introduction device (100) according to claim 9, **characterised in that** it branches, separating apart in the manner of a fork behind an inlet stretch, into primary introduction device extensions (220, 221), the outlet openings (220a, 221a) of which lie in vertical direction beneath the sole (S) of the laying slot.

11. Primary introduction device (100) according to claim 9 or 10, **characterised in that** it can be articulated on the laying slot formation apparatus (100) in a manner so as to be pivotable in a horizontally limited manner.

12. Primary introduction device (100) according to any of claims 9 to 11, **characterised in that** the outlet openings (220a, 221a) are arranged at defined intervals (A) next to one another.

13. Primary introduction device (100) according to any of claims 10 to 12, **characterised in that** each primary introduction device extension (220, 221) has at least one projecting cutting fin (230, 231) at its foot end.

14. Primary introduction device (100) according to claim 10, **characterised in that** the primary introduction device extension (220, 221) guides the strand material (201, 202) concerned continuously.

15. Primary introduction device (100) according to claim 10, **characterised in that** the primary introduction device extensions (220, 221) branch in vertical direction respectively at different levels at the branching portion behind the inlet stretch.

## Revendications

1. Dispositif de pose (10) pour l'enterrement de matériaux en brin flexibles, avec :
un dispositif de réalisation de fente de pose (100) s'étendant dans le sens vertical du dispositif de pose (10) pour la réalisation d'une fente de pose dans la terre,
un dispositif d'insertion principale (200) remorqué suivant dans le sens longitudinal (L) du dispositif de pose (10) le dispositif de réalisation de fente de pose (100) pour l'insertion de plusieurs matériaux en brin (201, 202) flexibles dans la fente de pose s'étendant jusqu'à une semelle (S), avec un boîtier creux (250), qui présente pour le guidage des matériaux en brin (201, 202) plusieurs puits de guidage, de préférence un nombre correspondant au nombre de matériaux en brin à poser de puits de guidage, qui s'étendent respectivement séparés les uns des autres à la manière d'un arc entre une ouverture d'entrée à l'extrémité de tête côté supérieur du dispositif d'insertion principale (200) et des ouvertures de sortie (220a, 221a) à l'extrémité de pied du dispositif d'insertion principale (200),
**caractérisé en ce que**
à chaque ouverture de sortie (220a, 221a) est associée au moins une propre ailette de coupe (230, 231, 232, 233) s'étendant dans le sens de remorquage (L) qui est agencée d'une mesure de déport (M) prédéterminée en dessous de la semelle (S) de la fente de pose réalisée par le dispositif de réalisation de fente de pose (100) au niveau du dispositif de pose (10) et par laquelle une piste de pose (T) est formable.

2. Dispositif de pose (10) selon la revendication 1, **caractérisé en ce que** le dispositif d'insertion principale (200) se ramifie derrière une voie d'entrée à la manière d'une fourche en prolongements de dispositif d'insertion principale (220, 221) séparés les uns des autres, dont les ouvertures de sortie (220a, 221a) se trouvent dans le sens vertical en dessous de la semelle (S) de la fente de pose générée par le dispositif de réalisation de fente de pose (100).

3. Dispositif de pose (10) selon la revendication 1 ou 2, **caractérisé en ce que** le dispositif d'insertion principale (200) est articulable sur le dispositif de réalisation de fente de pose (100) de façon à être pivotable selon une manière limitée horizontalement.

4. Dispositif de pose (10) selon l'une des revendications précédentes, **caractérisé en ce que** les ouvertures de sortie (220a, 221a) sont agencées les unes à côté des autres à des distances définies (A).

5. Dispositif de pose (10) selon l'une des revendications 2 à 4, **caractérisé en ce que** chaque prolongement de dispositif d'insertion principale (220, 221) présente à son extrémité de pied au moins une ailette de coupe (230, 231) en saillie.

6. Dispositif de pose (10) selon l'une des revendications 2 à 5, **caractérisé en ce qu'**un patin de lame de pliage (170) du dispositif de réalisation de fente de pose (100) présente plusieurs ailettes de coupe (232, 233) en saillie correspondant au moins au nombre de prolongements de dispositif d'insertion principale (220, 221), agencés en dessous de la semelle (S).

7. Dispositif de pose (10) selon la revendication 2, **caractérisé en ce que** chaque prolongement de dispositif d'insertion principale (220, 221) guide en continu le matériau en brin (201, 202) concerné.

8. Dispositif de pose (10) selon la revendication 2, **caractérisé en ce que** les prolongements de dispositif d'insertion principale (220, 221) se ramifient au niveau d'une section de ramification derrière la voie d'entrée dans le sens vertical respectivement à différentes hauteurs.

9. Dispositif d'insertion principale (200) pour un dispositif de pose (10) pour l'enterrement de matériaux en brin flexibles,
qui est conçu afin de suivre dans le sens longitudinal (L) du dispositif de pose (10) un dispositif de réalisation de fente de pose (100) pour l'insertion de plusieurs matériaux en brin (201, 202) flexibles dans une fente de pose s'étendant jusqu'à une semelle (S) avec :
un boîtier creux (250) qui présente pour le guidage de matériaux en brin (201, 202) plusieurs puits de guidage, de préférence un nombre correspondant au nombre des matériaux en brin à poser de puits de guidage qui s'étendent respectivement séparés les uns des autres à la manière d'un arc entre une ouverture d'entrée à l'extrémité de tête côté supérieur du dispositif d'insertion principale (200) et des ouvertures de sortie (220a, 221a) à l'extrémité de pied du dispositif d'insertion principale (200),
**caractérisé en ce que**
à chaque ouverture de sortie (220a, 221a) est associée au moins une propre ailette de coupe (230, 231) avançant dans le sens de remorquage (L) qui est agencée à partir d'une surface de sol reposant sur la semelle (S) selon une mesure de déport (M) prédéterminée en dessous de la semelle (S) de la fente de pose et par laquelle une piste de pose (T) est formable dans la semelle (S).

10. Dispositif d'insertion principale (100) selon la revendication 9, **caractérisé en ce qu'**il se ramifie derrière une voie d'entrée en forme de fourche en divergeant en prolongements de dispositif d'insertion principale (220, 221) séparés les uns des autres, dont les ouvertures de sortie (220a, 221a) se trouvent dans le sens vertical en dessous de la semelle (S) de la fente de pose.

11. Dispositif d'insertion principale (100) selon la revendication 9 ou 10, **caractérisé en ce qu'**il est articulable sur le dispositif de réalisation de fente de pose (100) de façon à être pivotable selon une manière limitée horizontalement.

12. Dispositif d'insertion principale (100) selon l'une des revendications 9 à 11, **caractérisé en ce que** les ouvertures de sortie (220a, 221a) sont agencées les unes à côté des autres à des distances définies (A).

13. Dispositif d'insertion principale (100) selon l'une des revendications 10 à 12, **caractérisé en ce que** chaque prolongement de dispositif d'insertion principale (220, 221) présente à son extrémité de pied au moins une ailette de coupe (230, 231) en saillie.

14. Dispositif d'insertion principale (100) selon la revendication 10, **caractérisé en ce que** chaque prolongement de dispositif d'insertion principale (220, 221) guide en continu le matériau en brin (201, 202) concerné.

15. Dispositif d'insertion principale (100) selon la revendication 10, **caractérisé en ce que** les prolongements de dispositif d'insertion principale (220, 221) se ramifient au niveau d'une section de ramification derrière la voie d'entrée dans le sens vertical respectivement à différentes hauteurs.
